# EUROPEAN PATENT SPECIFICATION

(11) **EP 3 791 947 B1**
(45) Date of publication and mention of the grant of the patent: **27.07.2022**
(21) Application number: 20195552.3
(22) Date of filing: 10.09.2020
(51) Int. Cl.: B01D 46/00, B01D 46/24

(54) **PULSE-JET TYPE BAG FILTER ASSEMBLY**
BEUTELFILTERANORDNUNG VOM PULSSTRAHLTYP
ENSEMBLE DE FILTRE À SAC DE TYPE JET PULSÉ

(30) Priority: 11.09.2019 NL 2023812
(43) Date of publication of application: 17.03.2021
(73) Proprietor: Dutch Drying Systems B.V., 8013 RM Zwolle (NL)
(72) Inventor: SMEENK, Roelof Steven, 8025 BM Zwolle (NL); LEENSTRA, Remco, 8025 BM Zwolle (NL)
(74) Representative: V.O.

(56) References cited:
- WO-A1-2018/113860
- GB-A- 1 485 705
- US-A- 3 963 467
- US-A1- 2016 220 936

## Description

### FIELD

The invention relates to a pulse-jet type bag filter assembly for removing particles, in particular dried powder particles, from a flow of gas.

### BACKGROUND

Pulse-jet type bag filters are known as such and comprise a plurality of filter bags suspended in a filter housing. Such filter bags tend to be relatively delicate and fragile, leading to deteriorations and faults such as wear and breaking, in particular under influence of turbulence inside the filter housing.

It is generally known that turbulence can be reduced in one of several ways, for example by reducing flow velocity (distance per unit of time) and/or by increasing relevant dimensions, e.g. of a filter housing and/or associated channels.

Increasing dimensions can lead to problems with assembly and/or transport of the bag filter as well as problems with the bag filter's spatial arrangement during use, e.g. as part of a plant.

On the other hand, reducing flow velocity without correspondingly increasing relevant dimensions generally leads to a reduced flow rate (volume per unit of time), which, in bag filter applications, implies a reduced production rate (e.g. volume of filtered product per unit of time).

In applications where a bag filter is used to remove particles from a flow of gas, a particular complication arises from the need to limit (preferably prevent) the deposition of such particles in unwanted areas, for example in inlet channels of the bag filter.

Typically a sufficiently high gas flow velocity is applied such that the particles are suspended in the gas, thereby inhibiting their deposition. However, as outlined above, a high flow velocity can lead to (increased) turbulence, which negatively affects the filter bags.

Alternatively, such deposition can be limited by a substantially downward main flow direction, e.g. using a correspondingly oriented inlet channel. For example, WO2018113860 discloses a powder drying system having an inlet at the top portion of the filter unit. The inlet is positioned substantially centrally in the top portion of the filter unit. According to WO2018113860, the substantially centrally located inlet has the advantage of allowing a slower inlet flow speed leading to fewer problems with bag filter cage vibrations.

### SUMMARY

WO2018113860 shows (see its Fig. 2) that a substantial amount of additional volume is required centrally within the bag filter, in addition to the volume occupied by and/or located under the filter bags. Naturally, such additional, non-filtering, volume leads to the general problems associated with increased dimensions as outlined above.

It is therefore an object of the present invention to provide an improved pulse-jet type bag filter assembly, wherein at least one of the above disadvantages is overcome. In particular, the invention aims to provide a pulse-jet type bag filter assembly, which, compared to prior art assemblies, is more compact and/or enables reduced turbulence and/or enables a higher production rate. More in particular, the invention aims to improve a trade-off between size, turbulence and flow rate.

To that end, according to an aspect of the invention, there is provided a pulse-jet type bag filter assembly according to the features of claim 1, for removing particles, in particular dried powder particles, from a flow of gas.

The bag filter assembly comprises a bag filter housing defining a housing space and having a central housing axis which extends in a vertical direction. The bag filter housing comprises a top plate which divides the housing space between an upper housing space and a lower housing space.

A plurality of filter bags are arranged in the lower housing space and suspended from the top plate. Each filter bag divides the lower housing space between a pre-filtering subspace and a post-filtering subspace. The top plate includes a fluid connection between the post-filtering subspace and the upper housing space. Each filter bag is substantially permeable to the gas and substantially impermeable to particles which are larger than a predetermined particle size. Each filter bag is associated with a wire cage structure which is arranged in the post-filtering subspace and/or integrated in the filter bag to support the filter bag in a flow of gas through the filter bag.

The bag filter assembly further comprises at least one gas pulse injector comprising a valve which is configured to release a pulse of pressurized gas into the upper housing space and/or into the post-filtering subspace for intermittently changing a gas pressure gradient at at least one of the plurality of filter bags.

A gas flow outlet is fluidly connected to the upper housing space.

A plurality of gas flow inlet channels are connected to the bag filter housing. The inlet channels are each individually fluidly connected to the pre-filtering subspace at respective inlet connections which are spaced away from the central housing axis. Each inlet channel defines a respective inlet channel flow axis along which, in use, gas flows in the inlet channel. At the respective inlet connection each inlet channel flow axis extends in a direction which includes an angle with the central housing axis in the range of 0° to 30°, such that, in use, the inflow of gas with particles into the pre-filtering subspace is substantially downwardly directed.

Because the inlet connections are spaced away from the central housing axis, the filter bags, which are typically suspended vertically, and thereby occupy a vertically extending volume, can be arranged centrally in the filtering space. As a result, the filter housing can be narrowed, essentially towards the volume occupied by the filter bags, in particular at a distance from the inlet connections. In this way, advantageously, the size of the pulse-jet type bag filter associated with the substantially downwardly directed inflow can be reduced compared to prior art assemblies, while at the same time maintaining the advantage of a relatively low flow velocity (m/s) and reduced turbulence with the advantage of improved filter bag life time. Thus, a trade-off between size, turbulence and flow rate (m³/s) can be improved.

A further aspect provides a plant for the production of dried powder, wherein the plant includes: a drier having at least one outlet channel; and a pulse-jet type bag filter assembly according to the invention. The at least one outlet channel is fluidly connected to the plurality of inlet channels of the pulse-jet type bag filter assembly.

In such a plant, dried powder can be produced with benefit of the above mentioned advantages, wherein in particular environmental contamination from particles in an exhaust gas flow of the plant can be reduced.

According to yet a further aspect, a method of removing particles from a flow of gas comprises providing a pulse-jet type bag filter assembly according to the present invention and passing a flow of gas with particles through the plurality of gas flow inlet channels into the pre-filtering subspace.

Such a method can provide the above mentioned advantages.

### DETAILED DESCRIPTION

In the following, the invention will be explained further using exemplary embodiments and drawings. In the drawings:
Fig. 1 shows an isometric view of a pulse-jet type bag filter assembly according to an embodiment;
Fig. 2 shows a side view of the bag filter assembly of Fig. 1;
Fig. 3a shows a partially opened side view of the bag filter assembly of Fig. 1 in which, for the sake of clarity, only two filter bags are shown, wherein an opened area is indicated with a dashed box III;
Fig. 3b shows detail B of Fig. 3a, in particular a lower part of a wire cage structure and filter bag;
Fig. 4a shows an isometric view of a wire cage structure of the bag filter assembly of Fig. 1;
Fig. 4b shows a side view of the wire cage structure of Fig. 4a;
Fig. 4c shows a cross sectional view of said wire cage structure along the line IV-IV in Fig. 4b as well as an associated filter bag;
Fig. 5a shows a top view of the bag filter assembly of Fig. 1, wherein gas flow inlet channels are not shown;
Fig. 5b shows an exemplary gas flow assembly including gas flow inlet channels of the bag filter assembly of Fig. 1; and
Fig. 6 shows an isometric view of a plant for the production of dried powder according to an embodiment.

The drawings are schematic. In the drawings, similar or corresponding elements have been provided with similar or corresponding reference signs.

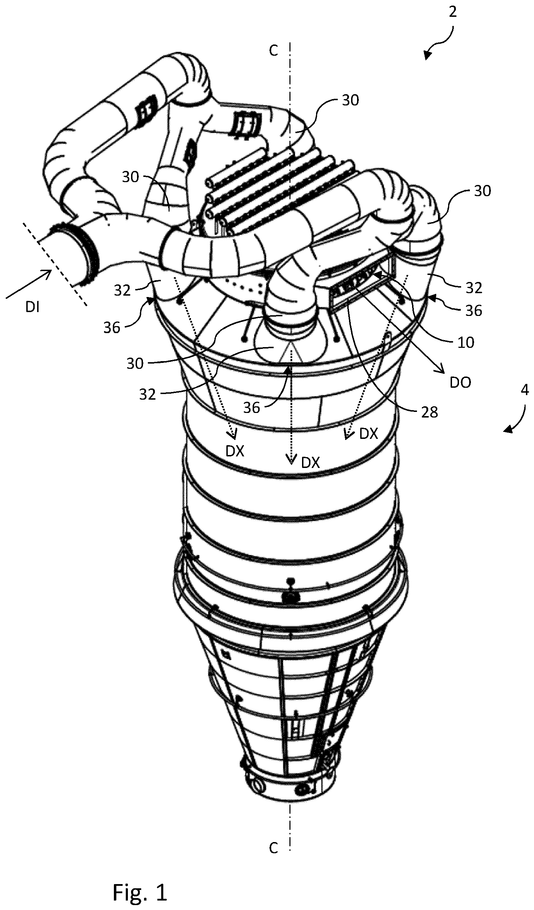

Figs. 1, 2 and 3a show an example of a pulse-jet type bag filter assembly 2 for removing particles, in particular dried powder particles, from a flow of gas. The assembly 2 comprises a bag filter housing 4 defining a housing space and having a central housing axis C which extends in a vertical direction, wherein the bag filter housing 4 comprises a top plate 8 which divides the housing space between an upper housing space 10 and a lower housing space 12.

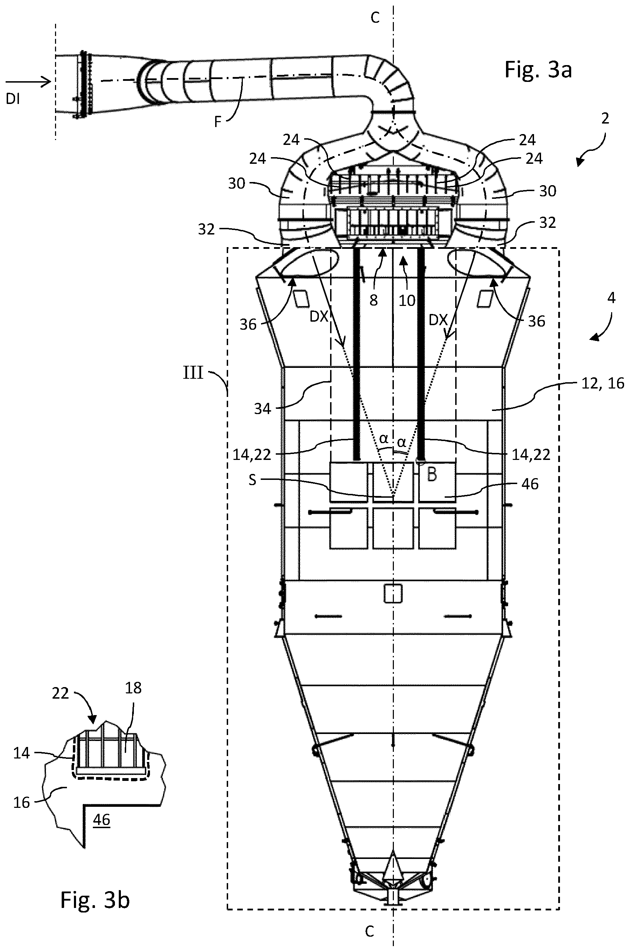

With reference to Fig. 3a, a plurality of filter bags 14 are arranged in the lower housing space 12 and suspended from the top plate 8. Each filter bag 14 divides the lower housing space 12 between a pre-filtering subspace 16 and a post-filtering subspace 18, as shown in Fig. 3b. The top plate 8 includes a fluid connection (not shown) between the post-filtering subspace 18 and the upper housing space 10. Each filter bag 14 is substantially permeable to the gas and substantially impermeable to particles which are larger than a predetermined particle size.

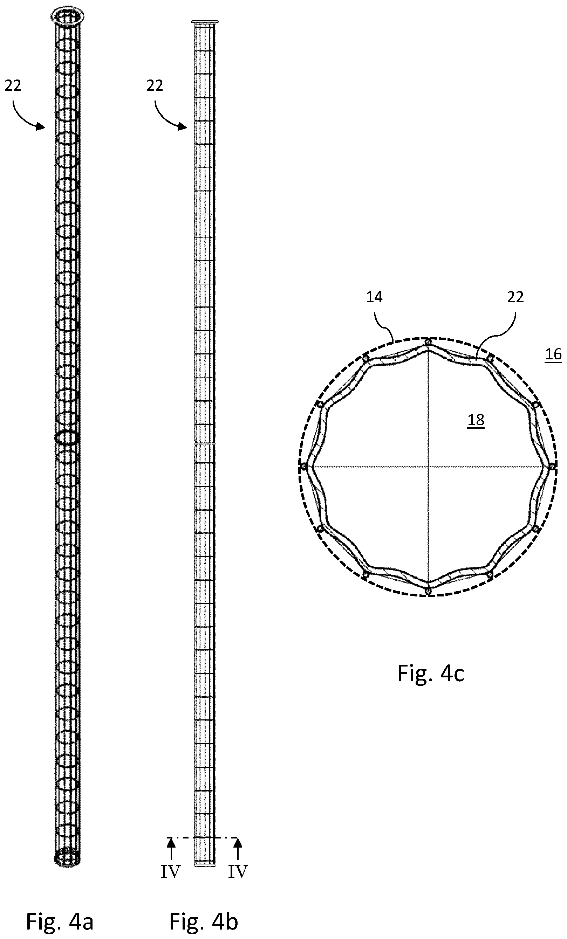

Each filter bag 14 is associated with a wire cage structure 22 which is arranged in the post-filtering subspace 18 and/or integrated in the filter bag 14 to support the filter bag 14 in a flow of gas through the filter bag 14. Figs. 4a, 4b and 4c show such a wire cage structure. Figs. 3b and 4c show a filter bag 14 with its associated wire cage structure 22 according to an embodiment.

It will be appreciated that, while only two exemplary filter bags 14 with wire cage structures 22 are shown in Fig. 3a, the exemplary assembly preferably includes more such filter bags with wire cage structures, for example such that a central volume 34 is substantially filled with the plurality of filter bags with wire cage structures. It will also be appreciated that the filter bags 14 are preferably relatively flexible, in particular with respect to their respective wire cage structure 22. In particular, during use, a filter bag 14 may be drawn more closely onto its respective wire cage structure 22 and/or away from said wire cage structure 22 as a result of a, preferably varying, gas pressure gradient between pre-filtering subspace 16 and post-filtering subspace 18.

The bag filter assembly comprises at least one gas pulse injector 24 comprising a valve (not shown) which is configured to release a pulse of pressurized gas into the upper housing space 10 and/or into the post-filtering subspace 18 for intermittently changing a gas pressure gradient at at least one of the plurality of filter bags 14.

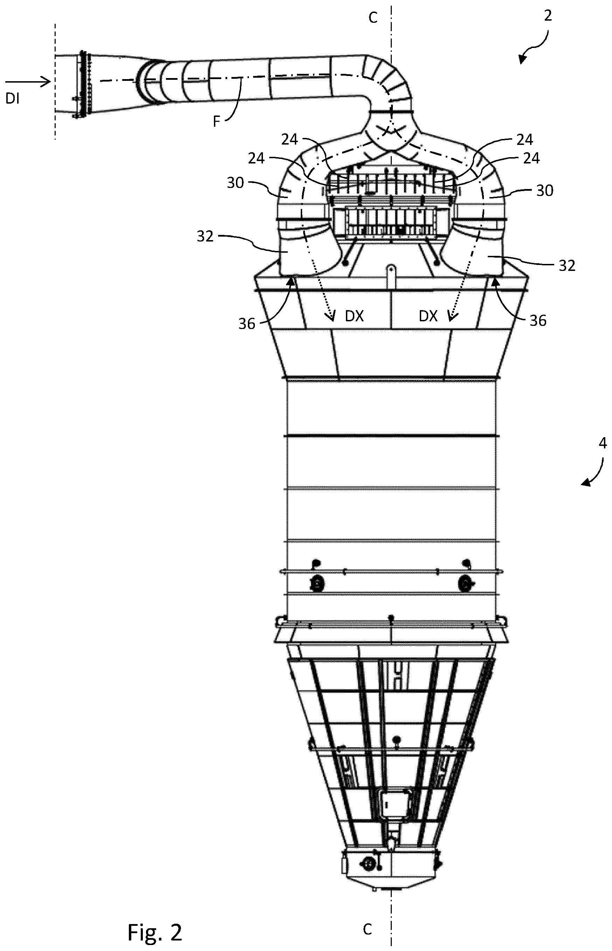

It will be appreciated that in Figs. 2 and 3a, for sake of clarity in the drawings, four such pulse injectors 24 have been provided with reference signs 24 while other such pulse injectors have not been provided with a reference sign.

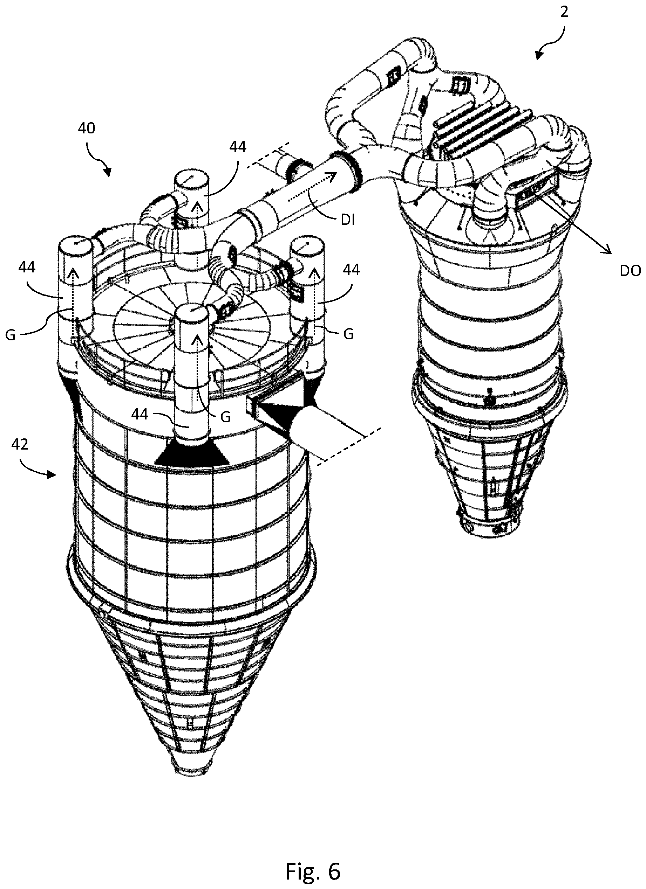

A gas flow outlet 28 is fluidly connected to the upper housing space 10, for example as shown in Fig. 1. The outlet 28 may be provided with a pump (not shown), e.g. a fan, for drawing gas through the outlet, in particular in a gas outlet flow direction DO. Alternatively, and/or additionally, gas may flow in the outlet flow direction DO as a result of a pump arranged upstream of said gas flow outlet 28, for example upstream of the inlet channels 30, in particular upstream of a drier 40 (see Fig. 6) which may be arranged upstream of the inlet channels 30.

A plurality of gas flow inlet channels 30 are connected to the bag filter housing 4 and each individually fluidly connected to the pre-filtering subspace 16 at respective inlet connections 32 which are spaced away from the central housing axis C. Each inlet channel 30 defines a respective inlet channel flow axis F along which, in use, gas flows in the inlet channel 30. At the respective inlet connection 32 each inlet channel flow axis F extends in a direction DX which includes an angle α with the central housing axis C in the range of 0° to 30°, preferably in the range of 0° to 20°, such that, in use, the inflow of gas with particles into the pre-filtering subspace 16 is substantially downwardly directed.

Exemplary angles α have been indicated in Fig. 3a for two respective inlet channels 30. Considering the corresponding configuration shown in Fig. 1, it will be appreciated that in the view of Fig. 3a, the plane of the drawing does not fully coincide with the respective planes in which the angles α are defined. Hence, in the plane of the drawing, the angles α appear smaller compared to the planes in which these angles are defined.

In an embodiment, the plurality of filter bags 14 extend in a central volume 34 which extends in the lower housing space 12 along the central housing axis C and radially outwardly from the central housing axis C, wherein the inlet connections 32 are positioned radially outside, and preferably adjacent to, the central volume 34 when viewed in the direction of the central housing axis C.

In this way, a substantially downward inflow can be realized at the inlet connections 32 while the bag filter housing 4 can be relatively narrow.

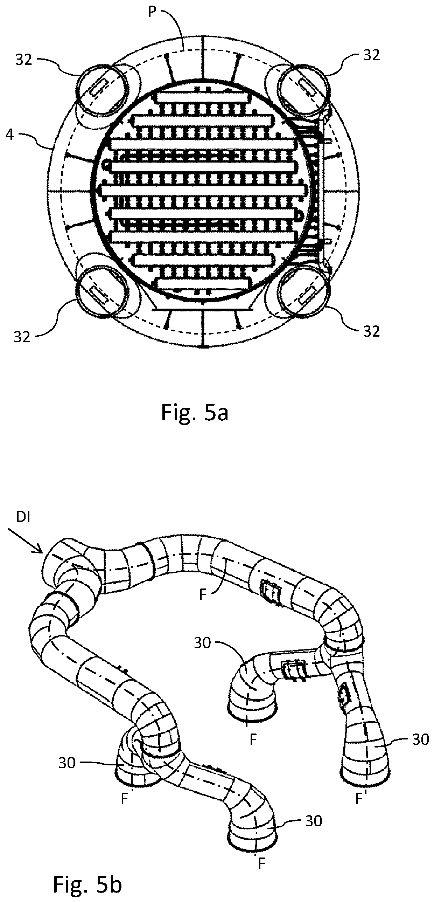

In an embodiment, the inlet connections 32 are distributed substantially evenly with respect to, in particular around, the central volume 34, in particular viewed (see Fig. 5a) in the direction of the central housing axis C.

Such a configuration can promote a substantially evenly distributed inflow of gas, which can advantageously reduce turbulence and/or improve filtering efficiency.

In Fig. 5a, the central housing axis C extends normal to the plane of the drawing at the center of pitch circle P.

In an embodiment, the central volume 34 is substantially cylindrical, in particular having a cylinder axis parallel to, preferably coinciding with, the central housing axis C.

Such a substantially cylindrical volume 34 enables a reduction of turbulence and/or a substantially even distribution of gas over the plurality of filter bags 14.

In an embodiment, as shown in Figs. 1, 2 and 3a, a cross sectional area of the filter housing 4, measured perpendicular to the central housing axis C, substantially varies along the central housing axis C, wherein said cross sectional area increases towards each of the inlet connections 32, in particular towards a respective lower side 36 of each of the inlet connections 32.

In this way, the filter housing 4 can be narrowed, in particular towards the central volume 34, while sufficient space can be provided for inflow of gas, in particular immediately downstream of the inlet connections 32.

Figs. 2 and 3a show that in particular a diameter, and thus a cross-sectional area, of the filter housing 4 may be larger, for example maximal, at the vertical level of the lower sides 36 of the inlet connections 32, compared to other vertical levels.

In an embodiment, each inlet channel 30, has a cross sectional area of the inlet channel 30, measured normal to the respective inlet channel flow axis F at the respective inlet connection 32, and wherein the cross sectional areas of the respective inlet channels are substantially equal.

Such a configuration can enable a more evenly distributed inflow of gas into, wherein in particular flow rate and/or flow velocity can be substantially equal among the inlet connections 32.

As shown in Fig. 3a, the bag filter housing 4 may include one or more safety plates 46 which are configured to open, e.g. break, at a predetermined excess pressure level in the housing 4. Such plates 46 may enable compliance with applicable safety standards, in particular the ATEX directive of the European Union.

In an embodiment, the inlet channels 30 are connected to the bag filter housing 4 at a pitch circle P (see Fig. 5a) of which the center is on the central housing axis C and which extends in a horizontal plane.

In this way, the inlet connections 30 can be arranged in a compact way around the central housing axis C, in particular around a substantially cylindrical central volume 34 in which the filter bags 14 extend.

In an embodiment, as shown in Fig. 5a, a pitch of the inlet channels 30 along the pitch circle P is constant so that the inlet channels 30 are evenly distributed along the circumference of the pitch circle P.

In this way, the inlet connections 32 can be distributed substantially evenly, thus promoting a substantially even inflow of gas into the pre-filtering subspace 16 and/or with respect to the plurality of filter bags 14.

In an embodiment, viewed in the direction of the central housing axis C, the pitch circle P encloses the top plate 8, wherein preferably, viewed in said direction, the top plate 8 is substantially circular having its center on the central housing axis C.

Since the filter bags 14 are suspended from the top plate 8, the top plate may define a top side of a central volume 34 in which the filter bags 14 extend. Thus, by enclosing the top plate 8, the pitch circle P may advantageously enclose said central volume 34, so that inlet connections 32 can be positioned in a compact manner around and/or adjacent the central volume 34.

In an embodiment, at each of the inlet connections 32, the respective inlet channel flow axis F extends along a respective direction DX which intersects with the central housing axis C, preferably at a common intersection point S on the central housing axis C.

Such directions DX of the inlet channel flow axes F can promote a substantially even distribution of gas in the lower housing space 12, in particular in the pre-filtering subspace 16, so that the gas may be substantially evenly distributed over the plurality of filter bags 14, in particular while promoting a substantially non-turbulent flow at the filter bags 14.

In an embodiment, at the respective inlet connection 32, each of the inlet channels 30 has an internal dimension which is such that, in use, a main flow velocity at which a flow of gas enters the pre-filtering subspace 16 promotes a substantially non-turbulent flow, wherein said main flow velocity is preferably less than 12 m/s, more preferably less than 6 m/s.

For example, in the embodiment shown, an internal dimension of each inlet channel 30 at the respective inlet connection 32 may be about 2 m². The cross-sectional area or internal dimension may for example be circular or elliptic. As explained, a non-turbulent flow can promote improved durability of filter bags 14. In case of a main flow velocity of less than 12 m/s, preferably less than 6 m/s, it is particularly advantageous that the flow is substantially downwardly directed, so that unwanted deposition of particles from the gas, e.g. in the inlet channels, can be substantially avoided.

In an embodiment, the plurality of gas flow inlet channels 30 comprises at least three gas flow inlet channels 30, preferably at least four, for example four, gas flow inlet channels 30.

Such a number of gas flow inlet channels 30 can enable a relatively even distribution of gas, in particular while reducing turbulence, while also enabling relatively simple construction and efficient maintenance.

In an embodiment, the at least one gas pulse injector 24 comprising a valve, comprises a plurality of gas pulse injectors 24, each comprising a valve. Each filter bag 14 of the plurality of filter bags 14 may be associated with an associated one of the plurality of pulse injectors 24 with valve, wherein the valves are each independently controllable.

Such a configuration can enable efficient and reliable operation of the filter assembly, wherein for example a pulse of gas is directed at one of the plurality of filter bags 14 for releasing particles accumulated on said filter bag, while other filter bags of the plurality of filter bags can remain operational as a filter in the main flow of gas. Thus, release of accumulated particles can be subsequently independently effected for each of the plurality of filter bags 14. Depending on the number of filter bags 14, the at least one gas pulse injector 24 may comprise for example at least 100 valves, preferably at least 300 valves, in particular 324 valves.

Fig. 6 shows an example of a plant for the production of dried powder, for example dried food or non-food powder, for example spray-dried dairy powder. The plant 38 includes a drier 40 having at least one outlet channel 44 and a pulse-jet type bag filter assembly 2. The at least one outlet channel 44 is fluidly connected to the plurality of inlet channels 30 of the pulse-jet type bag filter assembly 2, so that gas flowing out of the drier 40 may be filtered in the bag filter assembly 2.

In an embodiment, the at least one outlet channel 44 of the drier 40 comprises a plurality of outlet channels 42 which each define a respective outlet channel flow axis G along which, in use, gas flows in the outlet channel 44, wherein, at least at a connection between the outlet channel 44 and the drier housing 42, the outlet channel flow axis G extends substantially upwardly from the drier housing 42.

In this way, gas may flow in the outlet channels 44 at a relatively low flow velocity, substantially without a risk of particle deposition in the outlet channels 44. As a particular advantage, particles may fall down from the gas back into the drier housing 42 as the gas flows through the outlet channels 44, so that fewer particles travel out of the drier via the outlet channels 44, so that filtering capacity in the bag filter assembly 2 can be reduced.

While Fig. 6 shows a single main fluid connection between drier 40 and bag filter assembly 2, it will be appreciated that alternative configurations are possible. For example, each outlet channel 44 may be independently fluidly connected to a respective inlet channel 30 of the filter assembly 2.

Thus, an improved pulse-jet type bag filter assembly, an improved plant for the production of dried powder, and an improved method of removing particles from a flow of gas are provided, wherein in particular a trade-off between size, turbulence and flow rate in a pulse-jet type bag filter assembly is improved.

While the invention has been explained using exemplary embodiments and drawings, it will be appreciated that variations, alternatives and combinations are possible and that those are considered to fall within the scope of the claims. The plurality of filter bags may extend in more than one volume in the lower housing space. The inlet connections may be positioned at a vertical level which is adjacent to the top plate, or at another vertical level. Dried powder may be spray-dried and/or otherwise dried. Powder may be food powder, e.g. dairy powder or coffee powder, and/or non-food powder, e.g. animal feed powder. A drier may be a spray drier and/or another type of drier, for example a fluid bed drier, for producing dried powder particles. Additionally or alternatively to a drier, a plant for the production of dried powder may include an agglomeration assembly. The number of filter bags and the number of gas pulse injectors may each vary, e.g. depending on a desired filtering capacity of the bag filter assembly.

### List of reference signs

- 2.: Pulse-jet type bag filter assembly
- 4.: Bag filter housing
- 8.: Top plate
- 10.: Upper housing space
- 12.: Lower housing space
- 14.: Filter bag
- 16.: Pre-filtering subspace
- 18.: Post-filtering subspace
- 22.: Wire cage structure
- 24.: Gas pulse injector
- 28.: Gas flow outlet
- 30.: Gas flow inlet channel
- 32.: Inlet connection
- 34.: Central volume
- 36.: Lower side of inlet connection
- 38.: Plant
- 40.: Drier
- 42.: Drier housing
- 44.: Outlet channel of drier
- 46.: Safety plate
- a.: Angle with the central housing axis
- C.: Central housing axis
- DI.: Gas inlet flow direction
- DO.: Gas outlet flow direction
- DX.: Direction in which inlet channel flow axis extends at inlet connection
- F.: Inlet channel flow axis
- G.: Outlet channel flow axis
- P.: Pitch circle
- S.: Intersection point

## Claims

1. A pulse-jet type bag filter assembly for removing particles, in particular dried powder particles, from a flow of gas, the assembly (2) comprising:
- a bag filter housing (4) defining a housing space and having a central housing axis (C) which extends in a vertical direction, wherein the bag filter housing (4) comprises a top plate (8) which divides the housing space between an upper housing space (10) and a lower housing space (12);
- a plurality of filter bags (14) arranged in the lower housing space (12) and suspended from the top plate (8), wherein each filter bag (14) divides the lower housing space (12) between a pre-filtering subspace (16) and a post-filtering subspace (18), wherein the top plate (8) includes a fluid connection between the post-filtering subspace (18) and the upper housing space (10), wherein each filter bag (14) is substantially permeable to the gas and substantially impermeable to particles which are larger than a predetermined particle size, wherein each filter bag (14) is associated with a wire cage structure (22) which is arranged in the post-filtering subspace (18) and/or integrated in the filter bag (14) to support the filter bag (14) in a flow of gas through the filter bag (14);
- at least one gas pulse injector (24) comprising a valve which is configured to release a pulse of pressurized gas into the upper housing space (10) and/or into the post-filtering subspace (18) for intermittently changing a gas pressure gradient at at least one of the plurality of filter bags (14);
- a gas flow outlet (28) fluidly connected to the upper housing space (10); and
**characterised in that** the pulse-jet type bag filter assembly comprises further
- a plurality of gas flow inlet channels (30) which are connected to the bag filter housing (4) and each individually fluidly connected to the pre-filtering subspace (16) at respective inlet connections (32) which are spaced away from the central housing axis (C), wherein each inlet channel (30) defines a respective inlet channel flow axis (F) along which, in use, gas flows in the inlet channel (30), wherein at the respective inlet connection (32) each inlet channel flow axis (F) extends in a direction (DX) which includes an angle (a) with the central housing axis (C) in the range of 0° to 30°, preferably in the range of 0° to 20°, such that, in use, the inflow of gas with particles into the pre-filtering subspace (16) is substantially downwardly directed.

2. The bag filter assembly according to claim 1, wherein the plurality of filter bags (14) extend in a central volume (34) which extends in the lower housing space (12) along the central housing axis (C) and radially outwardly from the central housing axis (C), wherein the inlet connections (32) are positioned radially outside, and preferably adjacent to, the central volume (34) when viewed in the direction of the central housing axis (C).

3. The bag filter assembly according to claim 2, wherein the inlet connections (32) are distributed substantially evenly with respect to, in particular around, the central volume (34), in particular viewed in the direction of the central housing axis (C).

4. The bag filter assembly according to claim 2 or 3, wherein the central volume (34) is substantially cylindrical, in particular having a cylinder axis parallel to, preferably coinciding with, the central housing axis (C).

5. The bag filter assembly according to any one of the preceding claims, wherein a cross sectional area of the filter housing (4), measured perpendicular to the central housing axis (C), substantially varies along the central housing axis (C), wherein said cross sectional area increases towards each of the inlet connections (32), in particular towards a respective lower side (36) of each of the inlet connections (32).

6. The bag filter assembly according to any of the preceding claims, wherein, each inlet channel (30) has a cross sectional area of the inlet channel (30), measured normal to the respective inlet channel flow axis (F) at the respective inlet connection (32), and wherein the cross sectional areas of the respective inlet channels are substantially equal.

7. The bag filter assembly according to any of the preceding claims, wherein the inlet channels (30) are connected to the bag filter housing (4) at a pitch circle (P) of which the center is on the central housing axis (C) and which extends in a horizontal plane.

8. The bag filter assembly according to claim 7, wherein a pitch of the inlet channels (30) along the pitch circle (P) is constant so that the inlet channels (30) are evenly distributed along the circumference of the pitch circle (P).

9. The bag filter assembly according to claim 7 or 8, wherein, viewed in the direction of the central housing axis (C), the pitch circle (P) encloses the top plate (8), wherein, viewed in said direction, the top plate (8) is substantially circular having its center on the central housing axis (C).

10. The bag filter assembly according to any of the preceding claims, wherein, at each of the inlet connections (32), the respective inlet channel flow axis (F) extends along a respective direction (DX) which intersects with the central housing axis (C), preferably at a common intersection point (S) on the central housing axis (C).

11. The bag filter assembly according to any of the preceding claims, wherein, at the respective inlet connection (32), each of the inlet channels (30) has an internal dimension, which is such that, in use, a main flow velocity at which a flow of gas enters the pre-filtering subspace (16) promotes a substantially non-turbulent flow, wherein said main flow velocity is preferably less than 12 m/s, more preferably less than 6 m/s.

12. The bag filter assembly according to any of the preceding claims, wherein the plurality of gas flow inlet channels (30) comprises at least three gas flow inlet channels (30).

13. The bag filter assembly according to any one of the preceding claims, wherein the at least one gas pulse injector (24) comprising a valve, comprises a plurality of gas pulse injectors (24), each comprising a valve, wherein each filter bag (14) of the plurality of filter bags (14) is associated with an associated one of the plurality of pulse injectors (24) with valve, wherein the valves are each independently controllable.

14. A plant for the production of dried powder, wherein the plant (38) includes:
- a drier (40) having at least one outlet channel (44); and
- a pulse-jet type bag filter assembly (2) according to any of the preceding claims
wherein the at least one outlet channel (44) is fluidly connected to the plurality of inlet channels (30) of the pulse-jet type bag filter assembly (2).

15. The plant according to claim 14, wherein the at least one outlet channel (44) of the drier (40) comprises a plurality of outlet channels (42) which each define a respective outlet channel flow axis (G) along which, in use, gas flows in the outlet channel (44), wherein, at least at a connection between the outlet channel (44) and the drier housing (42), the outlet channel flow axis (G) extends substantially upwardly from the drier housing (42).

16. A method of removing particles, from a flow of gas, the method comprising:
- providing a pulse-jet type bag filter assembly (2) according to any of claims 1 - 13; and
- passing a flow of gas with particles through the plurality of gas flow inlet channels (30) into the pre-filtering subspace (16), preferably at a main flow velocity at which the flow is substantially non-turbulent, preferably a main flow velocity of less than 12 m/s, more preferably less than 6 m/s.

## Patentansprüche

1. Beutelfilteranordnung vom Pulsstrahltyp zum Entfernen von Partikeln, insbesondere von getrockneten Pulverpartikeln, aus einer Gasströmung, wobei die Anordnung (2) umfasst:
- ein Beutelfiltergehäuse (4), das einen Gehäuseraum definiert und eine zentrale Gehäuseachse (C) aufweist, die sich in vertikaler Richtung erstreckt, wobei das Beutelfiltergehäuse (4) eine obere Platte (8) umfasst, die den Gehäuseraum zwischen einem oberen Gehäuseraum (10) und einem unteren Gehäuseraum (12) unterteilt;
- mehrere Filterschläuche (14), die in dem unteren Gehäuseraum (12) angeordnet und an der oberen Platte (8) aufgehängt sind, wobei jeder Filterbeutel (14) den unteren Gehäuseraum (12) in einen Vorfilterungsunterraum (16) und einen Nachfilterunterraum (18) unterteilt, wobei die obere Platte (8) eine Fluidverbindung zwischen dem Nachfilterunterraum (18) und dem oberen Gehäuseraum (10) einschließt, wobei jeder Filterbeutel (14) im Wesentlichen durchlässig für das Gas und im Wesentlichen undurchlässig für Partikel ist, die größer als eine vorbestimmte Partikelgröße sind, wobei jedem Filterbeutel (14) eine Drahtkäfigstruktur (22) zugeordnet ist, die in dem Nachfilterunterraum (18) angeordnet und/oder in den Filterbeutel (14) integriert ist, um den Filterbeutel (14) in einer Gasströmung durch den Filterbeutel (14) zu unterstützen;
- wenigstens einen Gasimpulsinjektor (24), der ein Ventil umfasst, das so eingerichtet ist, dass es einen Druckgasimpuls in den oberen Gehäuseraum (10) und/oder in den Nachfilterunterraum (18) abgibt, um einen Gasdruckgradienten an wenigstens einem der mehreren Filterschläuche (14) intermittierend zu ändern;
- einen Gasströmungsauslass (28), der mit dem oberen Gehäuseraum (10) in Fluidverbindung steht; und
**dadurch gekennzeichnet ist, dass** die Beutelfilteranordnung vom Pulsstrahltyp ferner umfasst
- mehrere Gasströmungseinlasskanäle (30), die mit dem Beutelfiltergehäuse (4) verbunden sind und jeweils einzeln mit dem Vorfilterungsunterraum (16) an jeweiligen Einlassverbindungen (32) in Fluidverbindung stehen, die von der zentralen Gehäuseachse (C) beabstandet sind, wobei jeder Einlasskanal (30) eine jeweilige Einlasskanalströmungsachse (F) definiert, entlang derer im Gebrauch Gas in den Einlasskanal (30) strömt, wobei sich an der jeweiligen Einlassverbindung (32) jede Einlasskanalströmungsachse (F) in einer Richtung (DX) erstreckt, die einen Winkel (a) mit der zentralen Gehäuseachse (C) im Bereich von 0° bis 30°, vorzugsweise im Bereich von 0° bis 20°, einschließt, so dass im Gebrauch das Einströmen von Gas mit Partikeln in den Vorfilterungsunterraum (16) im Wesentlichen nach unten gerichtet ist.

2. Beutelfilteranordnung nach Anspruch 1, wobei sich die mehreren Filterschläuche (14) in einem zentralen Volumen (34) erstrecken, das sich im unteren Gehäuseraum (12) entlang der zentralen Gehäuseachse (C) und von der zentralen Gehäuseachse (C) radial nach außen erstreckt, wobei die Einlassverbindungen (32) in Richtung der zentralen Gehäuseachse (C) gesehen radial außerhalb und vorzugsweise neben dem zentralen Volumen (34) positioniert sind.

3. Beutelfilteranordnung nach Anspruch 2, wobei die Einlassverbindungen (32) im Wesentlichen gleichmäßig in Bezug auf das zentrale Volumen (34), insbesondere in Richtung der zentralen Gehäuseachse (C) gesehen, verteilt sind.

4. Beutelfilteranordnung nach Anspruch 2 oder 3, wobei das zentrale Volumen (34) im Wesentlichen zylindrisch ist, insbesondere mit einer Zylinderachse, die parallel zur zentralen Gehäuseachse (C) verläuft und vorzugsweise mit dieser zusammenfällt.

5. Beutelfilteranordnung nach einem der vorhergehenden Ansprüche, wobei eine senkrecht zur zentralen Gehäuseachse (C) gemessene Querschnittsfläche des Filtergehäuses (4) entlang der zentralen Gehäuseachse (C) im Wesentlichen variiert, wobei die Querschnittsfläche zu jeder der Einlassverbindungen (32) hin, insbesondere zu einer jeweiligen Unterseite (36) jeder der Einlassverbindungen (32), zunimmt.

6. Beutelfilteranordnung nach einem der vorhergehenden Ansprüche, wobei jeder Einlasskanal (30) eine Querschnittsfläche des Einlasskanals (30) aufweist, die senkrecht zur jeweiligen Einlasskanalströmungsachse (F) am jeweiligen Einlassanschluss (32) gemessen wird, und wobei die Querschnittsflächen der jeweiligen Einlasskanäle im Wesentlichen gleich sind.

7. Beutelfilteranordnung nach einem der vorhergehenden Ansprüche, wobei die Einlasskanäle (30) mit dem Beutelfiltergehäuse (4) auf einem Teilkreis (P) verbunden sind, dessen Mittelpunkt auf der zentralen Gehäuseachse (C) liegt und der in einer horizontalen Ebene verläuft.

8. Beutelfilteranordnung nach Anspruch 7, wobei ein Abstand der Einlasskanäle (30) entlang des Teilkreises (P) konstant ist, so dass die Einlasskanäle (30) gleichmäßig entlang des Umfangs des Teilkreises (P) verteilt sind.

9. Beutelfilteranordnung nach Anspruch 7 oder 8, wobei der Teilkreis (P) in Richtung der zentralen Gehäuseachse (C) gesehen die obere Platte (8) umschließt, wobei die obere Platte (8) in dieser Richtung gesehen im Wesentlichen kreisförmig ist und ihren Mittelpunkt auf der zentralen Gehäuseachse (C) hat.

10. Beutelfilteranordnung nach einem der vorhergehenden Ansprüche, wobei an jeder der Einlassverbindungen (32) die jeweilige Einlasskanalströmungsachse (F) entlang einer jeweiligen Richtung (DX) verläuft, die sich mit der zentralen Gehäuseachse (C) schneidet, vorzugsweise in einem gemeinsamen Schnittpunkt (S) auf der zentralen Gehäuseachse (C).

11. Beutelfilteranordnung nach einem der vorhergehenden Ansprüche, wobei am jeweiligen Einlassanschluss (32) jeder der Einlasskanäle (30) eine Innenabmessung aufweist, die so beschaffen ist, dass im Gebrauch eine Hauptströmungsgeschwindigkeit, mit der eine Gasströmung in den Vorfilterungsunterraum (16) eintritt, eine im Wesentlichen nicht-turbulente Strömung fördert, wobei die Hauptströmungsgeschwindigkeit vorzugsweise weniger als 12 m/s, besonders bevorzugt weniger als 6 m/s beträgt.

12. Beutelfilteranordnung nach einem der vorhergehenden Ansprüche, wobei die mehreren Gasströmungseinlasskanäle (30) wenigstens drei Gasströmungseinlasskanäle (30) umfassen.

13. Beutelfilteranordnung nach einem der vorhergehenden Ansprüche, wobei der wenigstens eine Gasimpulsinjektor (24), der ein Ventil umfasst, mehrere von Gasimpulsinjektoren (24) umfasst, die jeweils ein Ventil umfassen, wobei jeder Filterbeutel (14) der mehreren Filterschläuche (14) mit einem zugehörigen der mehreren Impulsinjektoren (24) mit Ventil verbunden ist, wobei die Ventile jeweils unabhängig steuerbar sind.

14. Anlage zur Herstellung von getrocknetem Pulver, wobei die Anlage (38) einschließt:
- einen Trockner (40) mit wenigstens einem Auslasskanal (44); und
- eine Beutelfilteranordnung (2) vom Pulsstrahltyp nach einem der vorhergehenden Ansprüche,
wobei der wenigstens eine Auslasskanal (44) mit den mehreren Einlasskanälen (30) der Beutelfilteranordnung (2) vom Pulsstrahltyp in Fluidverbindung steht.

15. Anlage nach Anspruch 14, wobei der wenigstens eine Auslasskanal (44) des Trockners (40) mehrere von Auslasskanälen (42) umfasst, die jeweils eine entsprechende Auslasskanal-Strömungsachse (G) definieren, entlang derer im Betrieb Gas im Auslasskanal (44) strömt, wobei sich die Auslasskanal-Strömungsachse (G) wenigstens an einer Verbindung zwischen dem Auslasskanal (44) und dem Trocknergehäuse (42) im Wesentlichen von dem Trocknergehäuse (42) nach oben erstreckt.

16. Verfahren zum Entfernen von Teilchen aus einer Gasströmung, wobei das Verfahren umfasst:
- Bereitstellen einer Beutelfilteranordnung (2) vom Pulsstrahltyp nach einem der Ansprüche 1 bis 13; und
- Leiten einer Gasströmung mit Partikeln durch die mehreren Gasströmungseinlasskanäle (30) in den Vorfilterunterraum (16), vorzugsweise mit einer Hauptströmungsgeschwindigkeit, bei der die Strömung im Wesentlichen nicht turbulent ist, vorzugsweise einer Hauptströmungsgeschwindigkeit von weniger als 12 m/s, bevorzugter weniger als 6 m/s.

## Revendications

1. Un ensemble formant filtre à poches du type à jet puisé pour éliminer les particules, notamment des particules de poudre séchées, à partir d'un flux de gaz, l'ensemble (2) comprenant :
un logement de filtres à poches (4) définissant un espace de logement et ayant un axe central du logement (C) qui s'étend dans une direction verticale, dans lequel le logement de filtres à poches (4) comprend une plaque supérieure (8) qui divise l'espace de logement entre un espace de logement supérieur (10) et un espace de logement inférieur (12) ; une pluralité de poches filtrantes (14) agencées dans l'espace de logement inférieur (12) et suspendu à la plaque supérieure (8), dans lequel chaque poche filtrante (14) divise l'espace de logement inférieur (12) entre un sous-espace de pré-filtrage (16) et un sous-espace de post-filtrage (18), dans lequel la plaque supérieure (8) comprend une connexion fluidique entre le sous-espace de post-filtrage (18) et l'espace de logement supérieur (10), dans lequel chaque poche filtrante (14) est sensiblement perméable au gaz et sensiblement imperméable aux particules qui sont plus grosses qu'un granulométrie prédéterminée, dans lequel chaque poche filtrante (14) est associée à une structure de cage métallique (22) qui est agencée dans le sous-espace de post-filtrage (18) et/ou intégrée dans la poche filtrante (14) pour supporter la poche filtrante (14) dans un écoulement de gaz à travers le poche filtrante (14) ;
au moins un injecteur d'impulsions de gaz (24) comprenant une vanne qui est configuré pour libérer une impulsion de gaz sous pression dans l'espace de logement supérieur (10) et/ou dans le sous-espace de post-filtrage (18) pour modifier par intermittence un gradient de pression de gaz au niveau d'au moins l'un de la pluralité de poches filtrantes (14) ;
une sortie d'écoulement de gaz (28) reliée fluidiquement à l'espace de logement supérieur (10) ; et **caractérisé en ce que** l'ensemble formant filtre à poches du type à jet puisé comprend en outre une pluralité de canaux d'admission de flux de gaz (30) qui sont reliés au logement de filtres à poches (4) et chacun étant individuellement relié fluidiquement au sous-espace de préfiltrage (16) au niveau de raccordements d'admission respectives (32) qui sont espacées de l'axe central du logement (C), dans lequel chaque canal d'admission (30) définit un axe d'écoulement de canal d'admission respectif (F) le long duquel, lors de l'utilisation, le gaz s'écoule dans le canal d'admission (30), dans lequel, au niveau du raccordement d'admission respectif (32), chaque axe d'écoulement de canal d'admission (F) s'étend dans une direction (DX) qui comprend un angle (a) avec l'axe central du logement (C) dans la plage de 0° à 30°, de préférence dans la plage de 0° à 20°, de sorte que, lors de l'utilisation, l'afflux de gaz avec des particules dans le sous-espace de préfiltrage (16) est sensiblement dirigé vers le bas.

2. Ensemble formant filtre à poches selon la revendication 1, dans lequel la pluralité de poches filtrantes (14) s'étendent dans un volume central (34) qui s'étend dans l'espace de logement inférieur (12) le long de l'axe de logement central (C) et radialement vers l'extérieur à partir de l'axe de logement central (C), dans lequel les raccordements d'admission (32) sont positionnés radialement à l'extérieur, et de préférence adjacents au volume central (34) lorsqu'ils sont vus dans la direction de l'axe central du logement (C).

3. Ensemble formant filtre à poches selon la revendication 2, dans lequel les raccordements d'admission (32) sont répartis sensiblement régulièrement par rapport à, notamment autour de, le volume central (34), notamment vu en direction de l'axe central du logement (C).

4. Ensemble formant filtre à poches selon la revendication 2 ou 3, dans lequel le volume central (34) est sensiblement cylindrique, en particulier ayant un axe de cylindre parallèle à, de préférence coïncidant avec, l'axe central du logement (C).

5. Ensemble formant filtre à poches selon l'une quelconque des revendications précédentes, dans lequel une surface en coupe transversale du logement des filtres (4), mesurée perpendiculairement à l'axe central du logement (C), varie sensiblement le long de l'axe central du logement (C), dans lequel ladite aire de section transversale augmente vers chacun des raccordements d'admission (32), en particulier vers un côté inférieur respectif (36) de chacun des raccordements d'admission (32).

6. Ensemble formant filtre à poches selon l'une quelconque des revendications précédentes, dans lequel chaque canal d'admission (30) a une aire en coupe transversale du canal d'admission (30), mesurée perpendiculairement à l'axe d'écoulement du canal d'admission respectif (F) au niveau du raccordement d'admission respectif (32), et dans lequel les aires en coupe transversale des canaux d'admission respectifs sont sensiblement égaux.

7. Ensemble formant filtre à poches selon l'une quelconque des revendications précédentes, dans lequel les canaux d'admission (30) sont reliés au logement de filtres à poches (4) selon un cercle primitif (P) dont le centre est sur l'axe central du logement (C) et qui s'étend dans un plan horizontal.

8. Ensemble formant filtre à poches selon la revendication 7, dans lequel un pas des canaux d'admission (30) le long du cercle primitif (P) est constant de sorte que les canaux d'admission (30) sont uniformément répartis le long de la circonférence du cercle primitif (P).

9. Ensemble formant filtre à poches selon la revendication 7 ou 8, dans lequel, vu dans la direction de l'axe central du logement (C), le cercle primitif (P) enferme la plaque supérieure (8), dans lequel, vu dans ladite direction, la plaque supérieure (8) est sensiblement circulaire ayant son centre sur l'axe central du logement (C).

10. Ensemble formant filtre à poches selon l'une quelconque des revendications précédentes, dans lequel, au niveau de chacun des raccordements d'admission (32), l'axe d'écoulement du canal d'admission respectif (F) s'étend le long d'une direction respective (DX) qui croise l'axe central du logement (C), de préférence à un point d'intersection commun (S) sur l'axe central du logement (C).

11. Ensemble formant filtre à poches selon l'une quelconque des revendications précédentes, dans lequel, au niveau du raccordement d'admission respectif (32), chacun des canaux d'admission (30) a une dimension interne, qui est telle que, lors de l'utilisation, une vitesse d'écoulement principal à laquelle un écoulement de gaz entre dans le sous-espace de préfiltrage (16) favorise un écoulement sensiblement non turbulent, dans lequel ladite vitesse d'écoulement principal est de préférence inférieure à 12 m/s, plus préférablement inférieure à 6 m/s.

12. Ensemble formant filtre à poches selon l'une quelconque des revendications précédentes, dans lequel la pluralité de canaux d'admission de flux de gaz (30) comprend au moins trois canaux d'admission de flux de gaz (30).

13. Ensemble formant filtre à poches selon l'une quelconque des revendications précédentes, dans lequel le au moins un injecteur d'impulsions de gaz (24) comprenant une vanne, comprend une pluralité d'injecteurs d'impulsions de gaz (24), chacun comprenant une vanne, dans lequel chaque poche filtrante (14) de la pluralité de poches filtrantes (14) est associée à un injecteur associé de la pluralité d'injecteurs à impulsions (24) avec vanne, dans lequel les vannes sont chacune contrôlables indépendamment.

14. Installation de production de poudre séchée, dans laquelle l'installation (38) comprend :
un sécheur (40) ayant au moins un canal de sortie (44) ; et
un ensemble formant filtre à poches du type à jet pulsé (2) selon l'une quelconque des revendications précédentes, dans laquelle le au moins un canal de sortie (44) est en communication fluidique avec la pluralité de canaux d'admission (30) de l'ensemble formant filtre à poches du type à jet pulsé (2).

15. Installation selon la revendication 14, dans laquelle le au moins un canal de sortie (44) du sécheur (40) comprend une pluralité de canaux de sortie (42) qui définissent chacun un axe d'écoulement de canal de sortie respectif (G) le long duquel, en utilisation, le gaz s'écoule dans le canal de sortie (44), dans lequel, au moins au niveau d'un raccordement entre le canal de sortie (44) et le logement du sécheur (42), l'axe d'écoulement du canal de sortie (G) s'étend sensiblement vers le haut à partir du logement du sécheur (42).

16. Procédé d'élimination de particules, d'un écoulement de gaz, le procédé comprenant les étapes consistant à :
fournir un ensemble formant filtre à poches du type à jet pulsé (2) selon l'une quelconque des revendications 1 à 13 ; et
faire passer un flux de gaz avec des particules à travers la pluralité de des canaux d'admission du flux (30) dans le sous-espace de préfiltration (16), de préférence à une vitesse d'écoulement principale à laquelle l'écoulement est sensiblement non turbulent, de préférence une vitesse d'écoulement principale inférieure à 12 m/s, plus préférablement inférieure à 6 m/s.
